# EUROPEAN PATENT APPLICATION

(11) **EP 4 797 514 A1**
(43) Date of publication of application: **26.08.2026**
(21) Application number: 24925436.8
(22) Date of filing: 22.07.2024
(51) Int. Cl.: H02M 1/08, H02M 1/38, H02M 7/5387

(54) **CONVERTER CONTROL METHOD, CONVERTER, AND CHIP**

(30) Priority: 19.02.2024 CN 202410184337
(71) Applicant: Shanghai Moorewatt Energy Technology Co., Ltd., Shanghai 200131 (CN)
(72) Inventor: HOU, Kun, Shanghai 200131 (CN); XU, Rong, Shanghai 200131 (CN)
(74) Representative: Zacco Sweden AB
(86) International application number: PCT/CN2024/106767
(87) International publication number: WO 2025/175694

(57) **Abstract**

The present application relates to a converter control method, a converter, and a chip. The converter comprises an alternating-current side half-bridge circuit and a controller, and the method is used in the controller. The converter control method comprises: when the alternating-current side half-bridge circuit satisfies a zero-crossing switching condition, switching the control mode of the alternating-current side half-bridge circuit from a first mode to a second mode, wherein the second mode comprises: switch devices located on a same bridge arm are turned on in a preset sequence or turned off in a preset sequence, and corresponding switch devices located on different bridge arms are complementarily turned on. The converter control method has high reliability.

## Description

### RELATED APPLICATIONS

This disclosure claims priority to Chinese Patent Application No. 2024101843376, filed on February 19, 2024, and entitled "CONVERTER CONTROL METHOD, CONVERTER, AND CHIP", the entire contents of which are incorporated herein by reference.

### TECHNICAL FIELD

The present disclosure relates to the technical field of power control, and in particular, to a converter control method, a converter, and a chip.

### BACKGROUND

In direct-current (DC)-alternating-current (AC) converter, the AC-side half-bridge circuit connected to the grid terminal needs to follow the position of the zero-crossing point of the grid voltage for switching control. However, in practical applications, it is often difficult for the controller to accurately obtain the zero-crossing point of the grid voltage, which prevents the controller from performing the switching control for the converter accurately, thus likely causing problems such as short circuit or overvoltage stress, etc., to occur in the AC-side half-bridge circuit connected between the converter and the grid terminal, and causing damage to the AC-side switching device.

In a converter control method in the related art, the switching devices located at the same bridge arm in the AC-side half-bridge circuit are controlled to be turned on or off simultaneously near the estimated zero-crossing point, and the switching devices of different bridge arms are controlled turned on in a complementary manner.

However, the above converter control method has poor reliability.

### SUMMARY

In view of the above technical problems, it is necessary to provide a converter control method, a converter, and a chip capable of improving the reliability.

In a first aspect, the present disclosure provides a converter control method, the converter includes an alternating-current (AC)-side half-bridge circuit and a controller, the method is used in the controller, and the method includes:
switching a control mode of the AC-side half-bridge circuit from a first mode to a second mode when the AC-side half-bridge circuit satisfies a zero-crossing switching condition, wherein the second mode includes that switching devices located on a same bridge arm are turned on or turned off according to a preset sequence, and that corresponding switching devices located on different bridge arms are turned on in a complementary manner.

In an embodiment, the zero-crossing switching condition includes: an absolute value of an AC-side grid voltage falling from above a voltage threshold to the voltage threshold, or a preset zero-crossing start phase, or a preset zero-crossing start instant.

In an embodiment, an upper bridge arm circuit of the AC-side half-bridge circuit includes a first switching device and a second switching device, a lower bridge arm circuit of the AC-side half-bridge circuit includes a third switching device and a fourth switching device, the second switching device and the third switching device are respectively connected to a midpoint of a bridge arm of the AC-side half-bridge circuit.

The second mode includes a second positive mode, and the second positive mode includes that: the first switching device and the third switching device are turned on in the complementary manner, the second switching device is turned on earlier than the first switching device is turned on, the second switching device is turned off after the first switching device is turned off, the fourth switching device is turned off after the third switching device is turned off, and the fourth switching device is turned on earlier than the third switching device is turned on.

Switching the control mode of the AC-side half-bridge circuit from the first mode to the second mode includes:
switching the control mode of the AC-side half-bridge circuit from the first mode to the second positive mode.

In an embodiment, the second positive mode further includes that:
the fourth switching device is turned off when the second switching device is turned on, and the fourth switching device is turned on when the second switching device is turned off.

In an embodiment, an upper bridge arm circuit of the AC-side half-bridge circuit includes a first switching device and a second switching device, a lower bridge arm circuit of the AC-side half-bridge circuit includes a third switching device and a fourth switching device, and the second switching device and the third switching device are respectively connected to a midpoint of a bridge arm of the AC-side half-bridge circuit. The second mode includes a second negative mode, and the second negative mode includes that: the second switching device and the fourth switching device are turned on in the complementary manner, the first switching device is turned off after the second switching device is turned off, the first switching device is turned on earlier than the second switching device is turned on, the third switching device is turned on earlier than the fourth switching device is turned on, and the third switching device is turned off after the fourth switching device is turned off.

Switching the control mode of the AC-side half-bridge circuit from the first mode to the second mode includes:
switching the control mode of the AC-side half-bridge circuit from the first mode to the second negative mode.

In an embodiment, the second negative mode further includes that:
the third switching device is turned on when the first switching device is turned off, and the third switching device is turned off when the first switching device is turned on.

In an embodiment, the second mode includes a second positive mode and a second negative mode. Switching the control mode of the AC-side half-bridge circuit from the first mode to the second mode when the AC-side half-bridge circuit satisfies the zero-crossing switching condition, includes:
switching the control mode of the AC-side half-bridge circuit from the first mode to the second positive mode when the zero-crossing switching condition is satisfied in a positive half-cycle of an AC-side voltage; and
switching the control mode of the AC-side half-bridge circuit from the second positive mode to the second negative mode.

The method further includes switching the control mode of the AC-side half-bridge circuit from the second negative mode to the first mode when a switching exit condition is satisfied in a negative half-cycle of the AC-side voltage.

The switching exit condition includes: the absolute value of the AC-side grid voltage rising from below the voltage threshold to the voltage threshold, or a preset zero-crossing end phase, or a preset zero-crossing end instant.

In an embodiment, switching the control mode of the AC-side half-bridge circuit from the first mode to the second mode when the AC-side half-bridge circuit satisfies the zero-crossing switching condition, further includes:
switching the control mode of the AC-side half-bridge circuit from the first mode to the second negative mode when the zero-crossing switching condition is satisfied in the negative half-cycle of the AC-side voltage; and
switching the control mode of the AC-side half-bridge circuit from the second negative mode to the second positive mode.

The method further includes switching the control mode of the AC-side half-bridge circuit from the second positive mode to the first mode when the switching exit condition is satisfied in the positive half-cycle of the AC-side voltage.

In a second aspect, the present disclosure further provides a converter including an ac-side half-bridge circuit and a controller.

The controller is configured to switch a control mode of the AC-side half-bridge circuit from a first mode to a second mode when the AC-side half-bridge circuit satisfies a zero-crossing switching condition, wherein in the second mode, switching devices located on a same bridge arm are turned on or turned off according to a preset sequence, and corresponding switching devices located on different bridge arms are turned on in a complementary manner.

In a third aspect, the present disclosure further provides a chip including a memory and a processor, the memory has a computer program stored thereon, and the processor, when executing the computer program, implements the steps of the methods of the first aspect.

In the converter control method, the converter and the chip, the converter includes the ac-side half-bridge circuit and the controller. The method is used in the controller, and the control mode of the ac-side half-bridge circuit is switched from the first mode to the second mode when the AC-side half-bridge circuit satisfies the zero-crossing switching condition. The second mode includes that the switching devices located on the same bridge arm are turned on or turned off according to the preset sequence, and that the corresponding switching devices located on different bridge arms are turned on in the complementary manner. In this way, a group of switching devices of the same bridge arm are not turned on or off simultaneously, but turned on according to the preset sequence or turned off according to the preset sequence, thereby avoiding the problem of low reliability caused by the possibility that two switching devices near the midpoint of the bridge arm may be broken down due to leakage inductance current.

### BRIEF DESCRIPTION OF THE DRAWINGS

In order to illustrate the technical solutions in the embodiments of the present disclosure or in the conventional art more clearly, the accompanying drawings required in the description of the embodiments or the conventional art will be briefly introduced below. Obviously, the drawings in the following description are only embodiments of the present disclosure, and for those of ordinary skill in the art, other drawings can be obtained based on the disclosed drawings without creative efforts.
FIG. 1 is a circuit topology diagram of a single-stage isolated grid-connected inverter according to an embodiment;
FIG. 2 is a circuit topology diagram of a single-stage isolated grid-connected inverter according to another embodiment;
FIG. 3 is a schematic diagram showing a zero-crossing interval according to an embodiment;
FIG. 4 is a schematic control timing diagram corresponding to a second positive mode according to an embodiment;
FIG. 5 is a schematic control timing diagram corresponding to a second negative mode according to an embodiment;
FIG. 6 is a schematic control timing diagram corresponding to a second mode according to an embodiment;
FIG. 7 is a schematic flowchart of a converter control method according to an embodiment;
FIG. 8 is a block diagram showing a structure of a converter control device according to an embodiment.

### DETAILED DESCRIPTION OF THE EMBODIMENTS

The technical solutions in the embodiments of the present disclosure will be described clearly and completely below with reference to the accompanying drawings in the embodiments of the present disclosure. Obviously, the described embodiments are only some, but not all, of the embodiments of the present disclosure. Based on the embodiments in the present disclosure, all other embodiments obtained by those of ordinary skill in the art without creative efforts shall fall within the protection scope of the present disclosure.

Unless otherwise defined, all technical and scientific terms used herein have the same meaning as commonly understood by those of ordinary skill in the art to which the present disclosure belongs. The terms used in the specification of the present disclosure herein are only for the purpose of describing specific embodiments and are not intended to limit the present disclosure.

It can be understood that the terms "first", "second", etc., used in the present disclosure, may be used herein to describe various elements, but these elements are not limited by these terms. These terms are only used to distinguish one element from another. For example, without departing from the scope of the present disclosure, a first resistor may be referred to as a second resistor, and similarly, a second resistor may be referred to as a first resistor. Both the first resistor and the second resistor are resistors, but they are not the same resistor.

It can be understood that "connection" in the following embodiments, if the connected circuits, modules, units, etc. have electrical signals or data transmission with each other, should be understood as "electrical connection", or "communication connection", etc.

It can be understood that the term "based on" as used in the present disclosure is used to describe one or more factors that influence a determination and does not exclude other factors that may influence the determination. For example, the phrase "determining A based on B" means that the determination of A may be based entirely on or at least in part on factor B, that is, B is a factor that influences the determination of A, but does not exclude that the determination of A may also be based on C.

As used herein, the singular forms "a", "an", and "the" may also include the plural forms unless the context clearly dictates otherwise. It can also be understood that the terms "comprising/including" or "having", etc., specify the presence of stated features, integers, steps, operations, components, parts, or combinations thereof, but do not preclude the possibility of the presence or addition of one or more other features, integers, steps, operations, components, parts, or combinations thereof. Meanwhile, the term "and/or" used in this specification includes any and all combinations of the associated listed items.

The converter control method provided by the embodiments of the present disclosure can be used in a controller of a converter in which a half-bridge circuit is arranged on an alternating-current (AC)-side. The upper bridge arm and the lower bridge arm of the half-bridge circuit are realized by bidirectional switches, and the controller is at least connected to each switching device in the converter and is configured to control a switching frequency, a duty cycle, and a phase shift of each switching device. The converter may be a DC-AC converter, such as a single-stage isolated grid-connected inverter, or an AC-DC converter, such as a single-stage isolated rectifier.

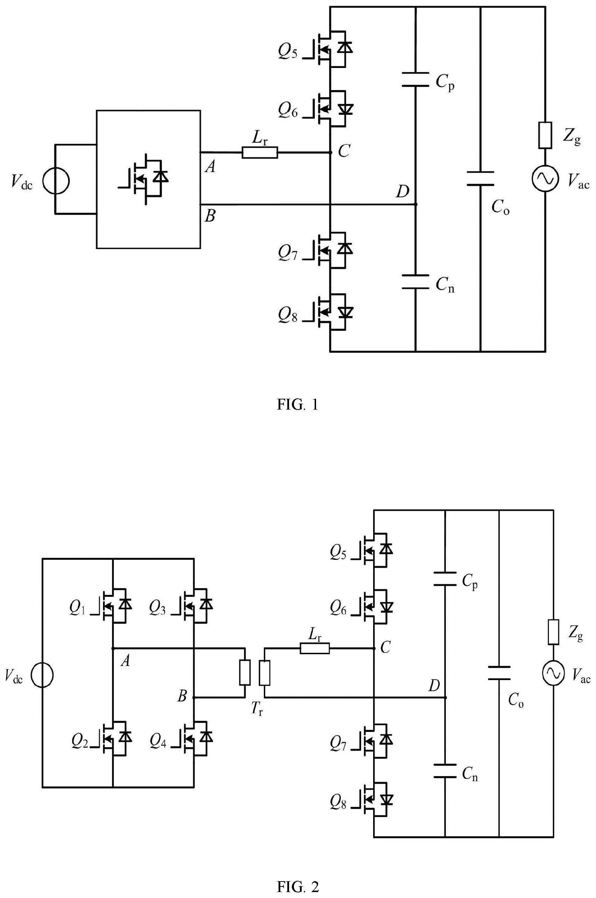

Referring to FIG. 1 and FIG. 2, each of which is a circuit topology diagram of a single-stage isolated grid-connected inverter according to an embodiment, V_{dc} represents a DC-side power supply voltage, and V_{ac} represents an AC-side grid voltage. The AC side adopts a half-bridge circuit, an upper bridge arm circuit of the half-bridge circuit on the AC side is implemented using a bidirectional switch composed of a switching device Q₅ and a switching device Q₆, and a lower bridge arm circuit is implemented using a bidirectional switch composed of a switching device Q₇ and a switching device Q₈. A midpoint *C* on the bridge arms is connected to a leakage inductance Lᵣ of the converter. The upper bridge arm circuit corresponds to a capacitor Cₚ, and the lower bridge arm circuit corresponds to a capacitor Cₙ. The capacitor Cₚ and the capacitor Cₙ are connected in series, and a capacitor Cₒ and a resistor Z_{g} form a filter circuit.

The controller is not shown in FIG. 1 and FIG. 2. The controller may be implemented by using a Microcontroller Unit (MCU) chip, or may be implemented based on a Digital Signal Processor (DSP) chip, a Field-Programmable Gate Array (FPGA), or a customized controller chip. Hardware for implementing the controller is not specifically limited in the embodiments of the present disclosure.

Referring to FIG. 2, for example, the DC side of the converter, for which the converter control method provided by the embodiments of the present disclosure is used, may be implemented by employing an H-bridge circuit. A first bridge arm circuit of the DC side H-bridge circuit includes a switching device Q₁ and a switching device Q₂, and a second bridge arm circuit includes a switching device Q₃ and a switching device Q₄, points A and B serve as load interfaces of the DC-side H-bridge circuit, and Tᵣ represents a transformer.

It should be noted that the embodiments of the present disclosure do not limit the specific circuit structure on the DC side, and FIG. 2 is only an exemplary embodiment.

The switching devices in the embodiments of the present disclosure may also be referred to as power switching transistors. Illustratively, the switching devices may be Metal-Oxide-Semiconductor Field-Effect Transistors (MOSFETs) or Insulated Gate Bipolar Transistors (IGBTs). The present disclosure does not limit the specific types and models of the switching devices.

In an embodiment, the converter includes an AC-side half-bridge circuit and a controller, and for converter control method is performed by the controller, and the method includes: switching a control mode of the AC-side half-bridge circuit from a first mode to a second mode when the AC-side half-bridge circuit satisfies a zero-crossing switching condition.

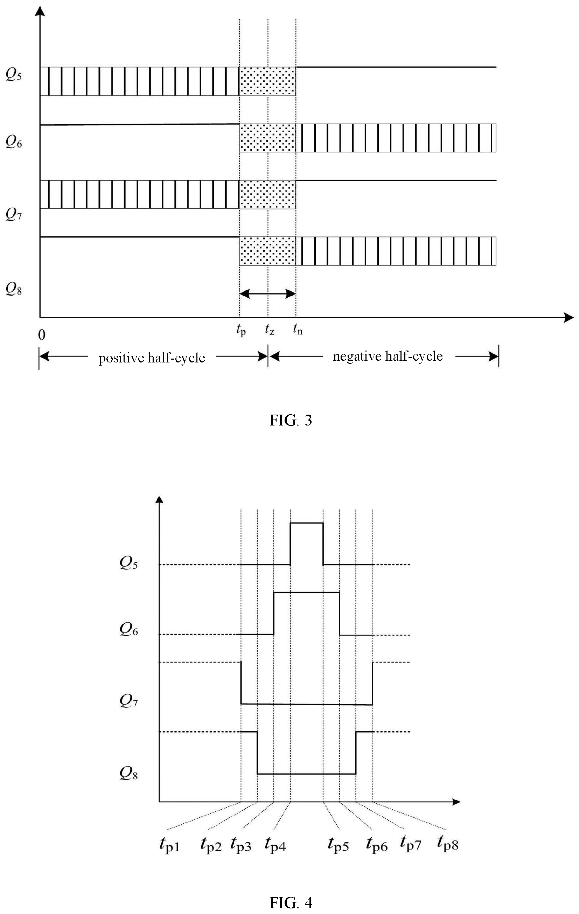

The first mode is a mode corresponding to normal operation of the converter. As shown in FIG 3, when the AC-side grid voltage V_{ac} is in a positive half-cycle, the switching device Q₅ and the switching device Q₇ are turned on in high-frequency complementary manner (as indicated by the vertical dashed boxes), and the switching device Q₆ and the switching device Q₈ are constantly on; when the AC-side grid voltage V_{ac} is in a negative half-cycle, the switching device Q₆ and the switching device Q₈ are turned on in high-frequency complementary manner (as indicated by the vertical dashed boxes), and the switching device Q₅ and the switching device Q₇ are constantly on.

The zero-crossing switching condition is a certain instant when the AC-side grid voltage in a positive half-cycle is about to drop to a zero voltage or when the AC-side grid voltage in a negative half-cycle is about to rise to a zero voltage. Referring to FIG. 3, the zero-crossing switching condition can be understood as a condition of entering a zero-crossing interval, the zero-crossing interval corresponds to the section within a dotted box in the control timing shown in FIG. 3.

In an embodiment, the zero-crossing interval is determined based on an amplitude of the AC-side grid voltage, and correspondingly, the zero-crossing switching condition includes that the absolute value of the AC-side grid voltage falls from above a voltage threshold to the voltage threshold. In the positive half-cycle, the zero-crossing switching condition corresponds to the AC voltage falling from above the voltage threshold to the voltage threshold and then to zero voltage, and in the negative half-cycle, the zero-crossing switching condition corresponds to the AC voltage rising from below the negative voltage threshold to above the negative voltage threshold and then to zero voltage.

In an embodiment, a process of switching the control mode of the AC-side half-bridge circuit from the first mode to the second mode when the AC-side half-bridge circuit satisfies the zero-crossing switching condition, includes: switching the control mode of the AC-side half-bridge circuit from the first mode to the second mode when the absolute value of the AC-side circuit voltage drops from above the voltage threshold to the voltage threshold.

In an embodiment, the zero-crossing interval is determined based on a phase of the AC-side grid voltage, and correspondingly, the zero-crossing switching condition includes a preset zero-crossing start phase. The zero-crossing start phase corresponding to the positive half-cycle is a preset phase slightly less than 180°, and for example, the zero-crossing start phase corresponding to the positive half-cycle is in a range from 168° to 177°. Optionally, the zero-crossing start phase corresponding to the positive half-cycle is 170° or 175°. The zero-crossing start phase corresponding to the negative half-cycle is a preset phase slightly less than 360°, and for example, the zero-crossing start phase corresponding to the negative half-cycle is in a range from 348° to 357°. Optionally, the zero-crossing start phase corresponding to the negative half-cycle is 350° or 355°.

In an embodiment, a process of switching the control mode of the AC-side half-bridge circuit from the first mode to the second mode when the AC-side half-bridge circuit satisfies the zero-crossing switching condition, includes: switching the control mode of the AC-side half-bridge circuit from the first mode to the second mode when the phase of the AC-side voltage is the preset start phase.

In the embodiment, the phase is used as a normalized attribute value of an AC voltage, and the phase of the AC-side voltage is used as a determination basis for zero-crossing switching, thereby improving the efficiency of converter control.

It can be understood that the AC-side grid voltage is a sine wave that changes periodically, so the zero-crossing start phase also changes periodically, that is, the zero-crossing switching condition for the controller includes a set of zero-crossing start phases.

In an embodiment, the zero-crossing interval is determined based on a preset switching instant. The zero-crossing switching condition includes a preset zero-crossing start instant. Referring to FIG. 3, for example, the zero-crossing interval is from an instant tₚ to an instant tₙ; the instant tₚ is a zero-crossing start instant corresponding to the positive half-cycle, the instant tₙ is a zero-crossing end instant corresponding to the negative half-cycle, and an instant t_{z} is a sampled zero-crossing point of the grid voltage.

The sampled zero-crossing point can be obtained by sampling by the controller. Due to factors such as switching of the sampling circuit, a sampling rate, certain errors may be introduced, causing the sampled zero-crossing point to not completely coincide with the actual zero-crossing point of the AC-side grid voltage. In the embodiment, the sampled zero-crossing point is used as a reference point to determine the zero-crossing start instant as the sampled zero-crossing point minus a preset duration, and determine the zero-crossing end instant as the sampled zero-crossing point plus the preset duration, so as to ensure that the actual zero-crossing point of the grid voltage falls within the zero-crossing interval.

In some embodiments, the preset duration may be determined according to related factors such as the amplitude and the phase of the AC-side grid voltage. In another embodiment, as a difference between the sampled zero-crossing point and the actual zero-crossing point is not very large in general, the preset duration can be determined according to an empirical value. In general, the preset duration is in the order of milliseconds.

For convenience of describing the embodiments, a determination process of the zero-crossing interval is described according to a process of changing from the positive half-cycle into the negative half-cycle shown in FIG. 3. It can be understood that a corresponding zero-crossing interval is also configured for the AC-side grid voltage in the process of changing from the negative half-cycle to the positive half-cycle, and based on the zero-crossing interval shown in FIG. 3, those skilled in the art can clearly know how to set a zero-crossing interval corresponding to a process of changing from a negative half-cycle to a positive half-cycle.

In an embodiment, switching the control mode of the AC-side half-bridge circuit from the first mode to the second mode when the AC-side half-bridge circuit satisfies the zero-crossing switching condition, includes: switching the control mode of the AC-side half-bridge circuit from the first mode to the second mode at the preset zero-crossing start instant.

The zero-crossing start instant includes a zero-crossing start instant corresponding to a positive half-cycle and a zero-crossing time corresponding to a negative half-cycle.

It can be understood that the AC-side grid voltage is a sine wave that changes periodically, so the zero-crossing start instant also changes periodically, the controller timing includes a group (zero-crossing start instant, zero-crossing end instant).

In an embodiment, the converter control method further includes: switching the control mode of the AC-side half-bridge circuit from the second mode to the first mode when the AC-side half-bridge circuit satisfies a switching exit condition. Correspondingly, the switching exit condition includes: the absolute value of the AC-side grid voltage rising from below the voltage threshold to the voltage threshold, or a preset zero-crossing end phase, or a preset zero-crossing end instant.

In an embodiment, the zero-crossing end phase corresponding to the positive half-cycle is a preset phase slightly larger than 180°, and for example, the zero-crossing end phase corresponding to the negative half-cycle is in a range from 183° to 192°. Optionally, the zero-crossing end phase corresponding to the negative half-cycle is 185° or 190°. The zero-crossing end phase corresponding to the positive half-cycle is a preset phase slightly larger than 0°, and for example, the zero-crossing end phase corresponding to the positive half-cycle is in a range from 3° to 12°. Optionally, the zero-crossing end phase corresponding to the positive half-cycle is 5° or 10°.

In an embodiment, the second mode includes that the switching devices located on the same bridge arm are turned on or turned off according to a preset sequence, and that corresponding switching devices located on different bridge arms are turned on in a complementary manner. The second mode is a mode corresponding to the converter operating in a preset zero-crossing interval. For example, the zero-crossing interval corresponding to the second mode is shown as a dotted box in FIG. 3, that is, the control timing of each switching device between the instant tₚ and the instant tₙ.

In the embodiment, a group of switching devices of the same bridge arm are not turned on or off simultaneously, but turned on according to the preset sequence or turned off according to the preset sequence, thereby avoiding the problem of low reliability caused by the possibility that two switching devices near the midpoint of the bridge arm may be broken down due to leakage inductance current.

For example, if a control method in the related art is used, in which the groups of switching devices of the same bridge arm are turned on and off simultaneously in the zero-crossing interval, referring to FIG. 2, it is assumed that at a certain instant, a leakage inductance current flows from the leakage inductance Lᵣ to the right, that is, to the midpoint C of the bridge arm. Due to the existence of the conduction dead zone of the switching device Q₅ and the switching device Q₇, during the switching of the bridge arm conduction state, the leakage inductance current has no discharge path, and can only be stored in the parasitic capacitance of the switching device Q₇ near the midpoint C of the bridge arm in the lower bridge arm circuit, which greatly increases the risk of breakdown of the switching device Q₇. The second mode is adopted in the embodiment, that is, the group of switching devices of the same bridge arm circuit are turned on according to the preset sequence, and referring to FIG. 4, the switching device Q₆ is turned on earlier than the switching device Q₅, and the switching device Q₈ is turned off after the switching device Q₇, in this way, not only the dead time (from the instant tₚ₁ to the instant tₚ₄) is ensured, but also a parallel diode of the switching device Q₅ and the switching device Q₆ provide a freewheeling path for the leakage inductance current, thus greatly reducing the risk of overvoltage breakdown of the switching device Q₇. Therefore, the converter control method provided by the embodiment has high reliability. When the leakage inductance current flows from the leakage inductance Lᵣ to the left, the principle of reducing the risk of breakdown of the switching device near the midpoint C of the bridge arm in the embodiment is similar to that of the above example, and will not be described repeatedly herein.

In an embodiment, referring to FIG. 4, the second mode includes a second positive mode. The second positive mode includes that: the first switching device and the third switching device are turned on in a complementary manner, the second switching device is turned on earlier than the first switching device, the second switching device is turned off after the first switching device is turned off, the fourth switching device is turned off after the third switching device is turned off, and the fourth switching device is turned on earlier than the third switching device is turned on.

As shown in FIGS. 2 and 4, the first switching device corresponds to the switching device Q₅, the second switching device corresponds to the switching device Q₆, the third switching device corresponds to the switching device Q₇, and the fourth switching device corresponds to the switching device Q₈. The period from the instant tₚ₁ to the instant tₚ₈ is one control cycle in the second mode.

In the second positive mode, the switching device Q₅ and the switching device Q₇ operate in a high frequency complementary state. The switching device Q₆ on the same bridge arm as the switching device Q₅ is turned on earlier than the switching device Q₅ and turned off after the switching device Q₅. The switching device Q₈ on the same bridge arm as the switching device Q₇ is turned off after the switching device Q₇, and is turned on earlier than the switching device Q₇.

As shown in FIG. 4, in the control cycle corresponding to the period from the instant tₚ₁ to the instant tₚ₈, the switching device Q₇ is turned off at the instant tₚ₁, the switching device Q₈ is turned off at the instant tₚ₂, the switching device Q₆ is turned on at the instant tₚ₃, the switching device Q₅ is turned on at the instant tₚ₄, the switching device Q₅ is turned off at the instant tₚ₅, the switching device Q₆ is turned off at the instant tₚ₆, the switching device Q₈ is turned on at the instant tₚ₇, and the switching device Q₇ is turned on at the instant tₚ₈. Where tₚ₂-tₚ₁> 0, tₚ₄-tₚ₃> 0, tₚ₆-tₚ₅> 0, and tₚ₈-tₚ₇> 0.

In an embodiment, the second positive mode includes that: the fourth switching device is turned off when the second switching device is turned on, the fourth switching device is turned on when the second switching device is turned off, that is, tₚ₃-tₚ₂=0, tₚ₇-tₚ₆=0. In the embodiment, a full-time freewheeling path is formed in a dead-time period, thereby improving the reliability of the converter control.

In an embodiment, referring to FIG. 4, the second positive mode includes that: the fourth switching device is turned off earlier than the second switching device is turned on, the fourth switching device is turned on after the second switching device is turned off, that is, tₚ₃-tₚ₂>0, and tₚ₇-tₚ₆>0. For example, the values of tₚ₃-tₚ₂ and tₚ₇-tₚ₆ are generally less than 1 us (microseconds).

In the embodiment, the process of switching the control mode of the AC-side half-bridge circuit from the first mode to the second mode includes: switching the control mode of the AC-side half-bridge circuit from the first mode to the second positive mode.

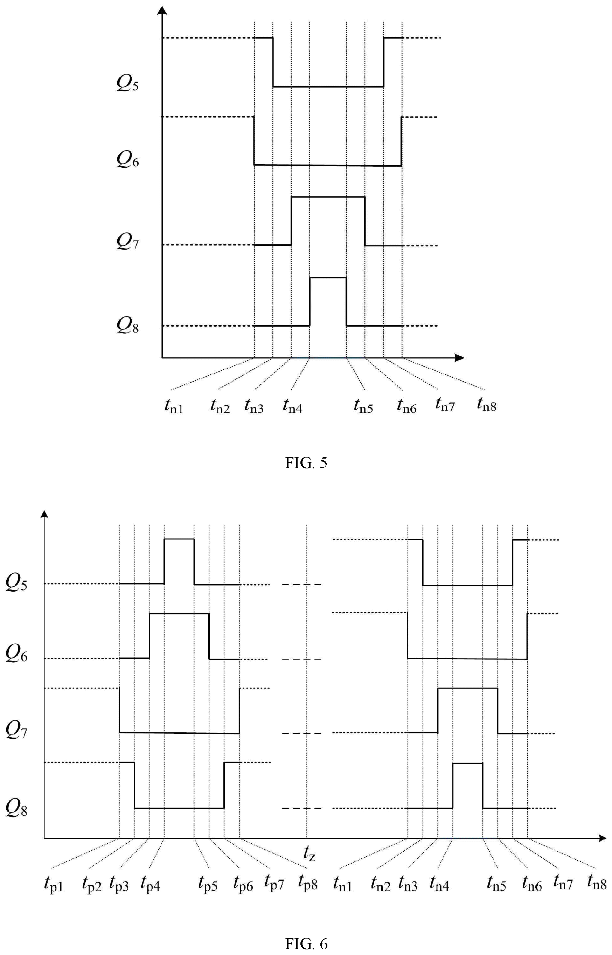

In an embodiment, referring to FIG. 5, the second mode includes a second negative mode. The second negative mode includes that: the second switching device and the fourth switching device are turned on in a complementary manner, the first switching device is turned off after the second switching device is turned off, the first switching device is turned on earlier than the second switching device is turned on, the third switching device is turned on earlier than the fourth switching device is turned on, and the third switching device is turned off after the fourth switching device is turned off.

As shown in FIGS. 2 and 5, the first switching device corresponds to the switching device Q₅, the second switching device corresponds to the switching device Q₆, the third switching device corresponds to the switching device Q₇, and the fourth switching device corresponds to the switching device Q₈. The period from the instant tₙ₁ to the instant tₙ₈ is one control cycle in the second mode.

In the second negative mode, the switching device Q₈ and the switching device Q₆ operate in a high frequency complementary state; the switching device Q₇ on the same bridge arm as the switching device Q₈ is turned on earlier than the switching device Q₈ and turned off after the switching device Q₈; the switching device Q₅ on the same bridge arm as the switching device Q₆ is turned off after the switching device Q₆, and is turned on earlier than the switching device Q₆.

As shown in FIG. 5, in the control cycle corresponding to the instant tₙ₁ to the instant tₙ₈, the switching device Q₆ is turned off at the instant tₙ₁, the switching device Q₅ is turned off at the instant tₙ₂, the switching device Q₇ is turned on at the instant tₙ₃, the switching device Q₈ is turned on at the instant tₙ₄, the switching device Q₈ is turned off at the instant tₙ₅, the switching device Q₇ is turned off at the instant tₙ₆, the switching device Q₅ is turned on at the instant tₙ₇, and the switching device Q₈ is turned on at the instant tₙ₈. Where tₙ₂-tₙ₁> 0, tₙ₄-tₙ₃> 0, tₙ₆-tₙ₅> 0, and tₙ₈-tₙ₇> 0.

In an embodiment, the second negative mode includes that: the third switching device is turned on when the first switching device is turned off, the third switching device is turned off when the first switching device is turned on, that is, tₙ₃-tₙ₂=0, tₙ₇-tₙ₆=0. In the embodiment, a full-time freewheeling path is formed in the dead-time period, thereby improving the reliability of the converter control.

In an embodiment, referring to FIG. 5, the second negative mode includes that: the third switching device is turned on after the first switching device is turned off, and the third switching device is turned off earlier than the first switching device is turned on; that is, tₙ₃-tₙ₂>0, tₙ₇-tₙ₆> 0.

In an embodiment, the process of switching the control mode of the AC-side half-bridge circuit from the first mode to the second mode includes: switching the control mode of the AC-side half-bridge circuit from the first mode to the second negative mode.

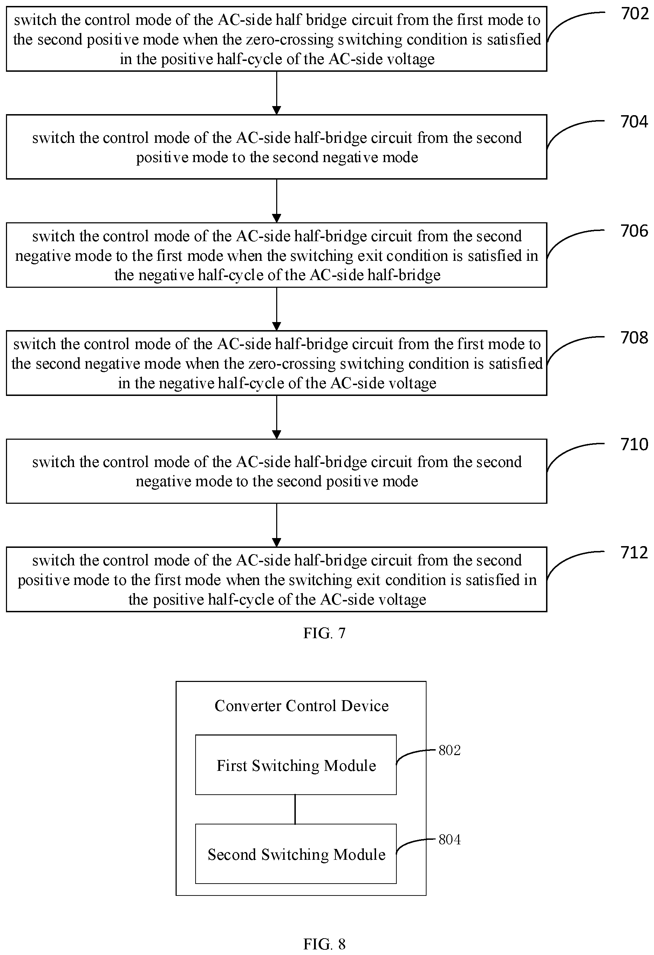

In an embodiment, referring to FIGS. 6 and 7, the second mode includes the second positive mode and the second negative mode, and in the converter control method, the process of switching the control mode of the AC-side half-bridge circuit from the first mode to the second mode when the AC-side half-bridge circuit satisfies the zero-crossing switching condition, includes:
In step 702, switch the control mode of the AC-side half bridge circuit from the first mode to the second positive mode when the zero-crossing switching condition is satisfied in the positive half-cycle of the AC-side voltage. The zero-crossing switching condition includes: the absolute value of the AC-side grid voltage dropping from above the voltage threshold to the voltage threshold, or the preset zero-crossing start phase, or the preset zero-crossing start instant.

In step 704, switch the control mode of the AC-side half-bridge circuit from the second positive mode to the second negative mode.

For example, the instant of switching from the second positive mode to the second negative mode may be a sampled zero-crossing point. For another example, the instant of switching from the second positive mode to the second negative mode may be a preset switching instant, and may be preset based on an actual zero-crossing point of the grid.

In an embodiment, the converter control method further includes:
In step 706, switch the control mode of the AC-side half-bridge circuit from the second negative mode to the first mode when the switching exit condition is satisfied in the negative half-cycle of the AC-side half-bridge. The switching exit condition includes: the absolute value of the AC-side grid voltage rising from below the voltage threshold to the voltage threshold, or the preset zero-crossing end phase, or the preset zero-crossing end instant.

In an embodiment, the process of switching the control mode of the AC-side half-bridge circuit from the first mode to the second mode when the AC-side half-bridge circuit satisfies the zero-crossing switching condition, further includes:
In step 708, switch the control mode of the AC-side half-bridge circuit from the first mode to the second negative mode when the zero-crossing switching condition is satisfied in the negative half-cycle of the AC-side voltage.

In step 710, switch the control mode of the AC-side half-bridge circuit from the second negative mode to the second positive mode.

For example, the instant of switching from the second negative mode to the second positive mode may be the sampled zero-crossing point; for another example, the instant of switching from the second negative mode to the second positive mode may be a preset switching instant, and may be preset based on an actual zero-crossing point of the grid.

In an embodiment, the converter control method further includes:
In step 712, switch the control mode of the AC-side half-bridge circuit from the second positive mode to the first mode when the switching exit condition is satisfied in the positive half-cycle of the AC-side voltage.

In the embodiment, in the zero-crossing interval corresponding to the positive half-cycle, the second positive mode is used to drive the AC-side half-bridge circuit, and in the zero-crossing interval corresponding to the negative half-cycle, the second negative mode is used to drive the AC-side half-bridge circuit. Depending on the polarity of the grid voltage, a driving mode more suitable for the corresponding polarity is adopted to further improve the control reliability.

It should be understood that, although various steps in the flowchart according to the above embodiments are sequentially shown as indicated by arrows, these steps are not necessarily sequentially executed in the order indicated by arrows. Unless explicitly stated herein, the order of execution of these steps is not strictly limited, and these steps may be executed in another order, or a plurality of steps may be executed simultaneously. Further, at least some of the steps in the flowchart according to the above embodiments may include a plurality of steps or a plurality of stages, which are not necessarily executed at the same instant, but may be executed at different instants, and the execution order of these steps or stages is not necessarily sequential, but may be alternately or alternately executed with other steps or at least a part of the steps or stages among the other steps.

Based on the same inventive concepts, an embodiment of the present disclosure also provides a converter control device for implementing the converter control method above. The solutions for solving the problem provided by the device are similar to the solutions described in the above methods. Therefore, for the specific limitations of the embodiments of the converter control device provided below, reference may be made to the limitations for the converter control method above, which will not be repeatedly described in detail herein.

In an embodiment, referring to FIG. 8, a converter control device used in a controller of a converter is provided, the converter further includes an AC-side half bridge circuit. The device includes:
The first switching module 802 is configured to switch a control mode of the AC-side half-bridge circuit from a first mode to a second mode when the AC-side half-bridge circuit satisfies a zero-crossing switching condition. The second mode includes that switching devices located on the same bridge arm are turned on or turned off according to a preset sequence, and that corresponding switching devices located on different bridge arms are turned on in a complementary manner.

In an embodiment, the zero-crossing switching condition includes: the absolute value of the AC-side grid voltage dropping from above a voltage threshold to the voltage threshold, or a preset zero-crossing start phase, or a preset zero-crossing start instant.

In an embodiment, an upper bridge arm circuit of the AC-side half-bridge circuit includes a first switching device and a second switching device, and a lower bridge arm circuit of the AC-side half-bridge circuit includes a third switching device and a fourth switching device. The second switching device and the third switching device are respectively connected to a midpoint of the bridge arm the AC-side half-bridge circuit. The second mode includes a second positive mode. The second positive mode includes that: the first switching device and the third switching device are turned on in a complementary manner, the second switching device is turned on earlier than the first switching device, the second switching device is turned off after the first switching device is turned off, the fourth switching device is turned off after the third switching device is turned off, and the fourth switching device is turned on earlier than the third switching device is turned on.

The first switching module 802 is configured to switch the control mode of the AC-side half-bridge circuit from the first mode to the second positive mode.

In an embodiment, the second positive mode further includes that: the fourth switching device is turned off when the second switching device is turned on, and the fourth switching device is turned on when the second switching device is turned off.

In an embodiment, the second mode includes a second negative mode. The second negative mode includes that: the second switching device and the fourth switching device are turned on in a complementary manner, the first switching device is turned off after the second switching device is turned off, the first switching device is turned on earlier than the second switching device is turned on, the third switching device is turned on earlier than the fourth switching device is turned on, and the third switching device is turned off after the fourth switching device is turned off.

The first switching module 802 is configured to switch the control mode of the AC-side half-bridge circuit from the first mode to the second positive mode.

In an embodiment, the second negative mode further includes that: the third switching device is turned on when the first switching device is turned off, and the third switching device is turned off when the first switching device is turned on.

In an embodiment, the second mode includes a second positive mode and a second negative mode, the first switching module 802 is configured to: switch the control mode of the AC-side half bridge circuit from the first mode to the second positive mode when the zero-crossing switching condition is satisfied in the positive half-cycle of the AC-side voltage; and switch the control mode of the AC-side half-bridge circuit from the second positive mode to the second negative mode.

The converter control device further includes a second switching module 804 configured to switch the control mode of the AC-side half-bridge circuit from the second negative mode to the first mode when a switching exit condition is satisfied in the negative half-cycle of the AC-side voltage. The switching exit condition includes: an absolute value of the AC-side grid voltage rising from below a voltage threshold to a voltage threshold, or a preset zero-crossing end phase, or a preset zero-crossing end instant.

In an embodiment, the first switching module 802 is configured to switch a control mode of the AC-side half-bridge circuit from the first mode to the second negative mode when the AC-side voltage negative half-cycle satisfies the zero-crossing switching condition; switch a control mode of the AC-side half bridge circuit from the second negative mode to the second positive mode.

The second switching module 804 is configured to switch the control mode of the AC-side half-bridge circuit from the second positive mode to the first mode when the switching exit condition is satisfied in the AC-side voltage positive half-cycle.

The modules in the converter control device may be implemented in whole or in part by software, hardware, and combinations thereof. Each of the modules may be embedded in or independent of a processor in the computer device in the form of hardware, or may be stored in a memory in the computer device in the form of software, so that the processor can call and execute operations corresponding to each of the modules.

An embodiment of the present disclosure provides a converter, including an AC-side half bridge circuit and a controller.

The controller is configured to switch a control mode of the AC-side half-bridge circuit from a first mode to a second mode when the AC-side half-bridge circuit satisfies a zero-crossing switching condition. In the second mode, switching devices located on the same bridge arm are turned on or turned off according to a preset sequence, and corresponding switching devices located on different bridge arms are turned on in a complementary manner.

In an embodiment, the zero-crossing switching condition includes: an absolute value of the AC-side grid voltage dropping from above a voltage threshold to the voltage threshold, or a preset zero-crossing start phase, or a preset zero-crossing start instant.

In an embodiment, an upper bridge arm circuit of the AC-side half-bridge circuit includes a first switching device and a second switching device, and a lower bridge arm circuit of the AC-side half-bridge circuit includes a third switching device and a fourth switching device. The second switching device and the third switching device are respectively connected to a midpoint of the bridge arm the AC-side half-bridge circuit. The second mode includes a second positive mode. The second positive mode includes that: the first switching device and the third switching device are turned on in a complementary manner, the second switching device is turned on earlier than the first switching device, the second switching device is turned off after the first switching device is turned off, the fourth switching device is turned off after the third switching device is turned off, and the fourth switching device is turned on earlier than the third switching device is turned on.

The controller is configured to switch the control mode of the AC-side half-bridge circuit from the first mode to the second positive mode.

In an embodiment, the second positive mode further includes that: the fourth switching device is turned off when the second switching device is turned on, the fourth switching device is turned on when the second switching device is turned off.

In an embodiment, the second mode includes a second negative mode. The second negative mode includes that: the second switching device and the fourth switching device are turned on in a complementary manner, the first switching device is turned off after the second switching device is turned off, the first switching device is turned on earlier than the second switching device is turned on, the third switching device is turned on earlier than the fourth switching device is turned on, and the third switching device is turned off after the fourth switching device is turned off.

The controller is configured to switch the control mode of the AC-side half-bridge circuit from the first mode to the second negative mode.

In an embodiment, the second negative mode further includes that: the third switching device is turned on when the first switching device is turned off, the third switching device is turned off when the first switching device is turned on.

In an exemplary embodiment, the second mode includes a second positive mode and a second negative mode. The controller is configured to: switch the control mode of the AC-side half bridge circuit from the first mode to the second positive mode when the zero-crossing switching condition is satisfied in the positive half-cycle of the AC-side voltage; switch the control mode of the AC-side half-bridge circuit from the second positive mode to the second negative mode; and switch the control mode of the AC-side half-bridge circuit from the second negative mode to the first mode when a switching exit condition is satisfied in the negative half-cycle of the AC-side voltage.

In an embodiment, the controller is configured to: switch a control mode of the AC-side half-bridge circuit from the first mode to the second negative mode when the AC-side voltage negative half-cycle satisfies the zero-crossing switching condition; switch a control mode of the AC-side half bridge circuit from the second negative mode to the second positive mode; and switch the control mode of the AC-side half-bridge circuit from the second positive mode to the first mode when the switching exit condition is satisfied in the AC-side voltage positive half-cycle.

An embodiment of the present disclosure further provides a chip. The chip includes a memory and a processor. The memory has a computer program stored thereon. The processor, when executing the computer program, implements the steps of the method of any one of the embodiments described above.

In an embodiment, a computer device is further provided, including a memory and a processor. The memory has a computer program stored thereon, and the processor, when executing the computer program, implements the steps of the method of any one of the embodiments described above.

In an embodiment, a computer-readable storage medium is provided, having a computer program stored thereon. The computer program, when executed by a processor, implements the steps of the method of any one of the embodiments described above.

In an embodiment, a computer program product is provided, including a computer program. The computer program, when executed by a processor, implements the steps of the method of any one of the embodiments described above.

It should be noted that the user information (including but not limited to user device information, user personal information, etc.) and data (including but not limited to data for analysis, stored data, displayed data, etc.) involved in the present disclosure are all information and data that have been authorized by the user or fully authorized by all parties, and the collection, use, and processing of relevant data must comply with relevant regulations.

Those of ordinary skill in the art can understand that all or part of the processes in the methods of the above embodiments can be implemented by instructing relevant hardware through a computer program. The computer program can be stored in a non-transitory computer-readable storage medium. The computer program, when executed, can include the processes of the method of any embodiments described above. Any reference to a memory, database, or other media used in the embodiments provided in the present disclosure may include at least one of non-transitory memory and transitory memory. The non-transitory memory may include Read-Only Memory (ROM), magnetic tape, floppy disk, flash memory, optical memory, high-density embedded non-transitory memory, resistive memory (ReRAM), Magneto resistive Random-Access Memory (MRAM), Ferroelectric Random-Access Memory (FRAM), Phase Change Memory (PCM), graphene memory, and the like. Transitory memory may include Random Access Memory (RAM) or external cache memory, etc. By way of illustration and not limitation, RAM may be in various forms, such as Static Random-Access Memory (SRAM) or Dynamic Random-Access Memory (DRAM), etc. The databases involved in the embodiments provided in the present disclosure may include at least one of relational databases and non-relational databases. Non-relational databases may include distributed databases based on blockchain, etc., but are not limited thereto. The processors involved in the embodiments provided in the present disclosure may be general-purpose processors, central processing units, graphics processors, digital signal processors, programmable logic devices, data processing logic devices based on quantum computing, etc., but are not limited thereto.

The technical features of the embodiments above can be combined arbitrarily. For the sake of brevity, not all possible combinations of the technical features in the embodiments above are described. However, as long as there is no contradiction in the combinations of the technical features, these combinations should be considered to be within the scope of the specification.

The embodiments above are merely several implementations of the present disclosure, and the descriptions thereof are relatively specific and detailed, but should not be construed as limiting the scope of the patent application. It should be noted that for those of ordinary skill in the art, various variations and improvements can be made without departing from the concept of the present disclosure, and these variations and improvements all fall within the protection scope of the present disclosure. Therefore, the protection scope of the patent of the present disclosure should be subject to the appended claims.

## Claims

1. A converter control method, wherein the converter comprises an alternating-current (AC)-side half-bridge circuit and a controller, the method is used in the controller, and **characterized in that** the method comprises:
switching a control mode of the AC-side half-bridge circuit from a first mode to a second mode when the AC-side half-bridge circuit satisfies a zero-crossing switching condition, wherein the second mode comprises that switching devices located on a same bridge arm are turned on or turned off according to a preset sequence, and that corresponding switching devices located on different bridge arms are turned on in a complementary manner.

2. The method of claim 1, wherein the zero-crossing switching condition comprises: an absolute value of an AC-side grid voltage falling from above a voltage threshold to the voltage threshold, or a preset zero-crossing start phase, or a preset zero-crossing start instant.

3. The method of claim 1, wherein an upper bridge arm circuit of the AC-side half-bridge circuit comprises a first switching device and a second switching device, a lower bridge arm circuit of the AC-side half-bridge circuit comprises a third switching device and a fourth switching device, the second switching device and the third switching device are respectively connected to a midpoint of a bridge arm of the AC-side half-bridge circuit;
the second mode comprises a second positive mode, and the second positive mode comprises that: the first switching device and the third switching device are turned on in the complementary manner, the second switching device is turned on earlier than the first switching device is turned on, the second switching device is turned off after the first switching device is turned off, the fourth switching device is turned off after the third switching device is turned off, and the fourth switching device is turned on earlier than the third switching device is turned on; and
switching the control mode of the AC-side half-bridge circuit from the first mode to the second mode comprises:
switching the control mode of the AC-side half-bridge circuit from the first mode to the second positive mode.

4. The method of claim 3, wherein the second positive mode further comprises that:
the fourth switching device is turned off when the second switching device is turned on, and the fourth switching device is turned on when the second switching device is turned off.

5. The method of claim 1, wherein an upper bridge arm circuit of the AC-side half-bridge circuit comprises a first switching device and a second switching device, a lower bridge arm circuit of the AC-side half-bridge circuit comprises a third switching device and a fourth switching device, and the second switching device and the third switching device are respectively connected to a midpoint of a bridge arm of the AC-side half-bridge circuit;
the second mode comprises a second negative mode, and the second negative mode comprises that: the second switching device and the fourth switching device are turned on in the complementary manner, the first switching device is turned off after the second switching device is turned off, the first switching device is turned on earlier than the second switching device is turned on, the third switching device is turned on earlier than the fourth switching device is turned on, and the third switching device is turned off after the fourth switching device is turned off; and
switching the control mode of the AC-side half-bridge circuit from the first mode to the second mode comprises:
switching the control mode of the AC-side half-bridge circuit from the first mode to the second negative mode.

6. The method of claim 5, wherein the second negative mode further comprises that:
the third switching device is turned on when the first switching device is turned off, and the third switching device is turned off when the first switching device is turned on.

7. The method of claim 2, wherein the second mode comprises a second positive mode and a second negative mode;
switching the control mode of the AC-side half-bridge circuit from the first mode to the second mode when the AC-side half-bridge circuit satisfies the zero-crossing switching condition, comprises:
switching the control mode of the AC-side half-bridge circuit from the first mode to the second positive mode when the zero-crossing switching condition is satisfied in a positive half-cycle of an AC-side voltage; and
switching the control mode of the AC-side half-bridge circuit from the second positive mode to the second negative mode; and
the method further comprises switching the control mode of the AC-side half-bridge circuit from the second negative mode to the first mode when a switching exit condition is satisfied in a negative half-cycle of the AC-side voltage;
wherein the switching exit condition comprises: the absolute value of the AC-side grid voltage rising from below the voltage threshold to the voltage threshold, or a preset zero-crossing end phase, or a preset zero-crossing end instant.

8. The method of claim 7, wherein switching the control mode of the AC-side half-bridge circuit from the first mode to the second mode when the AC-side half-bridge circuit satisfies the zero-crossing switching condition, further comprises:
switching the control mode of the AC-side half-bridge circuit from the first mode to the second negative mode when the zero-crossing switching condition is satisfied in the negative half-cycle of the AC-side voltage; and
switching the control mode of the AC-side half-bridge circuit from the second negative mode to the second positive mode; and
the method further comprises switching the control mode of the AC-side half-bridge circuit from the second positive mode to the first mode when the switching exit condition is satisfied in the positive half-cycle of the AC-side voltage.

9. A converter, wherein the converter comprises an AC-side half bridge circuit and a controller;
the controller is configured to switch a control mode of the AC-side half-bridge circuit from a first mode to a second mode when the AC-side half-bridge circuit satisfies a zero-crossing switching condition, wherein in the second mode, switching devices located on a same bridge arm are turned on or turned off according to a preset sequence, and corresponding switching devices located on different bridge arms are turned on in a complementary manner.

10. A chip, comprising a memory and a processor, wherein the memory has a computer program stored thereon, and the processor, when executing the computer program, implements steps of the method according to any one of claims 1 to 8.
